# EUROPEAN PATENT APPLICATION

(11) **EP 0 926 028 A1**
(43) Date of publication of application: **30.06.1999**
(21) Application number: 97830686.8
(22) Date of filing: 18.12.1997
(51) Int. Cl.: B60S 1/38

(54) **Windscreen wiper blade having a stiffening member**

(71) Applicant: Cooper Industries Italia S.p.A., 20124 Milano (IT)
(72) Inventor: Scorsiroli, Marcello, 10136 Torino (IT)
(74) Representative: Marchitelli, Mauro

(57) **Abstract**

Windscreen wiper blade for vehicles, comprising:
- a main support element (12),
- a wiping element (22) of elastomeric material and having an elongated shape, and
- an intermediate support structure including at least an intermediate rocker lever (24) articulated to the main support element (22) about an axis (28) orthogonal to the wiping element (22).
The blade comprises a stiffening member (36) fixed to the main support element (12) and having a pair of guide walls (46) facing opposite lateral walls (34) of the intermediate rocker lever (24).

## Description

The present invention relates to a windscreen wiper blade for vehicles of the type comprising a main support element, a wiping element of elastomeric material having an elongated shape, and an intermediate support structure interposed between the wiping element and the main support element and including at least an intermediate rocker lever articulated to the main support element about an axis orthogonal to the wiping element.

The present invention has been developed with the object to avoid or reduce transversal vibrations of the wiping element. Such vibration are particularly evident and annoying in wiper blades with six or eight wiping element gripping points, constituted by a main support element, two intermediate rocker levers and two or four inner rocker levers. However, the invention can also be applied to wiping blades with a structure of different type, in all cases wherein it is desirable to reduce or attenuate blade transversal vibration phenomena.

The innovating aspect of the present invention consists essentially in that a stiffening member is provided, fixed to the blade main support element and having a pair of guiding walls facing opposite lateral walls of an intermediate rocker lever.

The stiffening member performs a lateral containment and a guiding action for the intermediate rocker lever which effectively prevents said transversal vibration phenomena. The stiffening member can be placed in any point of the main support element, so as to perform said lateral containment in the part of the blade which is more subject to said vibrations. Preferably, the stiffening member is snap engaged in a trough opening already provided or expressly formed on the main support element. Therefore, the addition of a stiffening member according to the present invention to a wiping blade already existing in production can be made with minimum modification of the productive cycle and with very reduced additional costs.

Further characteristics and advantages of the present invention will become evident in the course of the detailed description which follows, given purely by way of non limiting example, with reference to the annexed drawings, wherein:
- figure **1** is a schematic perspective view of a windscreen wiper blade according to the present invention,
- figure **2** is a schematic section along line II-II of figure 1, and
- figure **3** is an exploded prospective view of the part indicated by arrow III in figure 1.

With reference to the drawings, 10 indicates a windscreen wiper blade for vehicles, comprising a main support element 12 made for example of sheared and bent sheet metal. The main support element 12 has a general channel configuration with U-shaped cross section, with an upper wall 14 and two lateral walls 16 parallel to each other. The main support element 12 is provided with a central articulation pin 18 for its connection by means of a connector per se known to the end of a windscreen wiper arm 20 schematically indicated with broken lines.

The windscreen wiper blade 10 comprises a wiping element 12 of elastomeric material with an elongated shape, which is connected to the main support element 12 through an intermediate support structure including a plurality of intermediate rocker levers 24 and inner rocker levers 26.

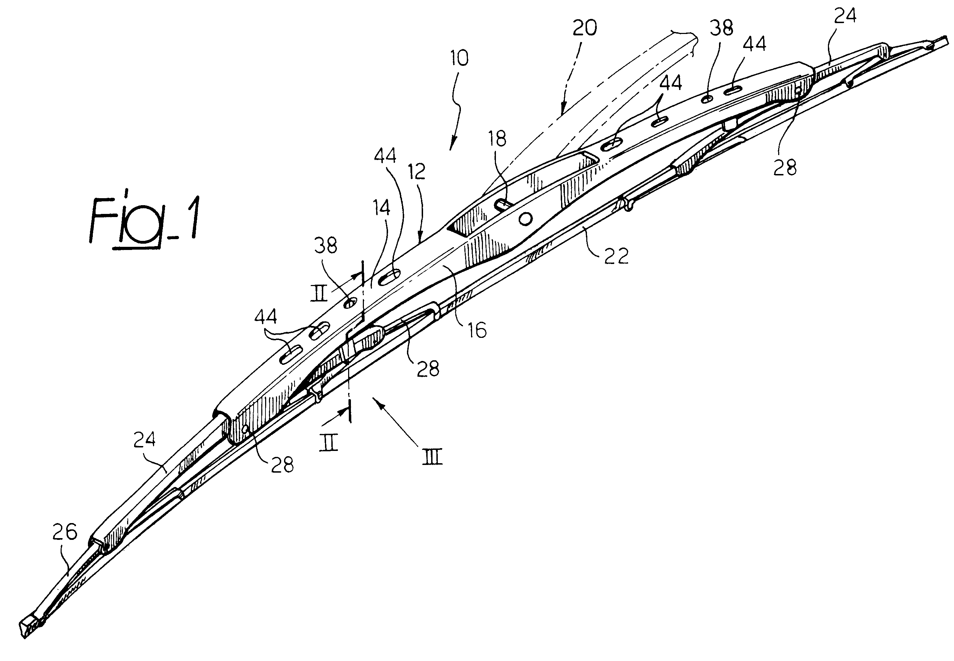

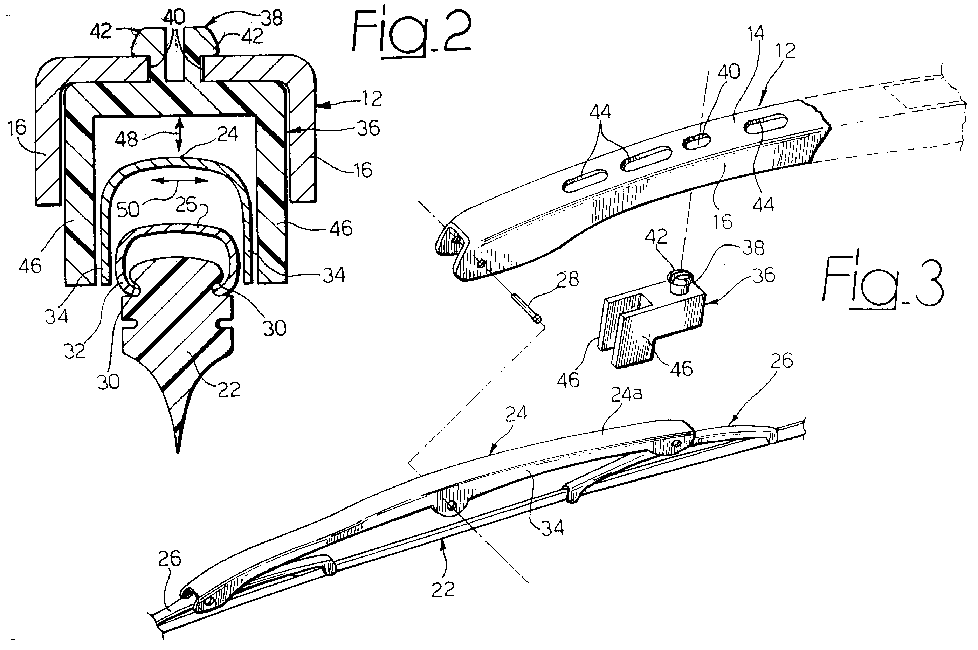

In the shown example, the intermediate support structure comprises two intermediate rocker levers 24 articulated to the ends of the main support element 12 by means of respective pins 28 fixed for example by riveting to the lateral walls 16 of the main support element 12. Each intermediate rocker lever 24 carries a pair of inner rocker levers 26 which grip at their ends the wiping element 22. The example shown in figure 1 forms therefore a structure with eight gripping points for the wiping element 22. With shorter wiping elements 22 it is possible to realize a support structure with six gripping points, by providing gripping point for the wiping element at the end of each intermediate rocking lever 24 and by providing at the other end of each intermediate rocker lever 24 and inner rocker lever 26 two gripping points for the wiping element. The connection of the wiping element 22 to the inner or intermediate rocker lever gripping points 24, 26 is carried out in a fully conventional way, in the way schematically shown in figure 2, by the insertion into longitudinal grooves 30 of the wiping elements of engagement portions 32 bent one towards the other.

As it is visible in particular in figure 2, the intermediate locker lever 24 has a channel section with two lateral walls 34 arranged internally with respect to the lateral walls 16 of the main support element 12. The inner rocker levers 26 have also a channel profile arranged internally with respect to the lateral walls 34 of the intermediate rocker lever 24.

The blade according to the present invention is moreover provided with a stiffening member 36 fixed to the main support element 12 and adapted to provide a transversal containment with respect to the inner portion 24a of an intermediate rocker lever 24. The stiffening member 36 is inserted in the channel section of the main support element 12 and is fixed thereto by engagement means, preferably of snap engagement type, which in the example shown in the figures have the shape of a broken pin 38 which engages a through opening 40 provided in the upper wall 14 of the main support element 12. The pin 38 is provided with teeth 42 which engage the external surface of the wall 14. The through opening 40 can be formed by a hole expressly provided for fixing the stiffening member 37 or in alternative can be formed by one of the various buttonhole apertures 44 (figures 1 and 2) which are normally provided in the upper wall 14 of the main support element 12. For the engagement with the buttonholes through openings 44, the pin 38 of the stiffening member 37 could be replaced by a snap engagement member with a profile corresponding to that of the buttonholes 44.

The stiffening member 36 has a pair of guiding walls 46 arranged externally and in a facing relationship with respect to the lateral walls 34 of the intermediate rocker lever 24. The guiding walls 46 of the stiffening member 36 leave the intermediate rocker lever 24 free to move in the direction indicated by double arrow 48 in figure 2 but retrain the rocker lever 24 in the transversal direction indicated by double arrow 50. By virtue of this transversal restraint, a stiffening effect of the structure is obtained, which is particularly effective to prevent that in use the wiping element or its support structure is subjected to transversal vibrations. The position of the stiffening member 36 with respect to the main support element 12 can be chosen so as to position the guiding walls 46 in correspondence with the zone of the rocker arm which is mostly affected by transversal vibration phenomena. As shown in figure 3, the guiding walls 46 can be arranged in a spaced out position with respect to the means which fix the member 36 to the main support element 12, in order to render easier assembling of the member 36 and in order to give to the intermediate rocker lever 24 the maximum freedom to oscillate in direction 48. The stiffening member 36 is preferably made of injection moulded plastics material. The shape of the member 36 shown in the figures is not binding and could be subjected to many variations depending on the shape and on the dimensions of the main support element 12 and of the intermediate rocker lever 24.

## Claims

1. Windscreen wiper blade for vehicles, comprising:
- a main support element (12),
- a wiping element (22) of elastomeric material having an elongated shape, and
- an intermediate support structure (24, 26) interposed between the wiping element (22) and the main support element (12) and including at least an intermediate rocker lever (24) articulated to the main support element (12) about an axis (28) orthogonal to the wiping element (22),
characterized in that it comprises a stiffening member (36) fixed to the main support element (12) and having a pair of guiding walls (46) facing and arranged externally with respect to opposite lateral walls (34) of said intermediate rocker lever (24).

2. Windscreen wiper blade according to claim 1, characterized in that the main support element (12) has a generally channel-shaped profile with an upper wall (14) and a pair of lateral walls (16) and in that said stiffening member (36) is constituted by a monolithic body provided with means (38) for snap engagement to said upper wall (14) of the main support element (12).

3. Windscreen wiper blade according to claim 2, characterized in that the stiffening member (36) is provided with a projecting pin (38) having restraint formations (42) which snap engage in a through opening (40) provided in said upper wall (14) of the main support element (12).

4. Windscreen wiper blade according to claim 2, characterized in that said guiding walls (46) of the stiffening member (36) are axially spaced out with respect to said fixing means (38).
